# NEUE EUROPÄISCHE PATENTSCHRIFT

(11) **EP 3 611 083 B2**
(45) Veröffentlichungstag und Bekanntmachung des Hinweises auf die Entscheidung über den Einspruch: **15.10.2025**
(45) Hinweis auf die Patenterteilung: 23.03.2022
(21) Anmeldenummer: 19184313.5
(22) Anmeldetag: 04.07.2019
(51) Int. Cl.: B62D 53/08

(54) **KUPPLUNGSPLATTE FÜR EINE SATTELKUPPLUNG**
COUPLING PLATE FOR A SADDLE COUPLING
PLAQUE D'ACCOUPLEMENT POUR UNE SELLETTE D ATTELAGE

(30) Priorität: 01.08.2018 DE 102018118656
(43) Veröffentlichungstag der Anmeldung: 19.02.2020
(73) Patentinhaber: JOST-WERKE Deutschland GmbH, 63263 Neu-Isenburg (DE)
(72) Erfinder: ALGÜERA, José Manuel, 63739 Aschaffenburg (DE); POLTE, Jens, Greenville, TN Tennessee 37745 (US)
(74) Vertreter: WSL Patentanwälte Partnerschaft mbB

(56) Entgegenhaltungen:
- EP-A1- 2 247 492
- WO-A1-2018/217848
- US-A- 5 765 849

## Beschreibung

Die Erfindung betrifft eine Kombination Kupplungsplatte für eine Sattelkupplung mit mindestens einem Versteifungselement gemäß der im Oberbegriff von Anspruch 1 stehenden Merkmale.

Mit Hilfe einer Sattelkupplung wird üblicherweise ein Sattelauflieger an einem Zugfahrzeug lösbar angekuppelt. Die Sattelkupplung ist hierfür auf dem Zugfahrzeug befestigt und weist neben einer Kupplungsplatte unter anderem eine Verschlussmechanik auf, mit deren Hilfe ein ortsfest am Sattelauflieger angeordneter Königszapfen in der Sattelkupplung festsetzbar ist. Darüber hinaus umfasst die Sattelkupplung zwei Lagerböcke, über welche die Kupplungsplatte an dem Zugfahrzeug abgestützt ist und die eine Verschwenkbarkeit der Kupplungsplatte um eine horizontale Schwenkachse zulassen. Die Lagerböcke greifen zugfahrzeugseitig entweder unmittelbar an einem Fahrzeugrahmen des Zugfahrzeugs an oder sind mittels eines zwischengebauten Hilfsrahmens an dem Fahrzeugrahmen angebracht. Es kann auch vorgesehen sein, dass die Lagerböcke auf einer Montageplatte stehen, die beide Holme des Fahrzeugrahmens verbindet. Die Kupplungsplatte ist im Fahrbetrieb enormen Belastungen ausgesetzt und üblicherweise in massiver Bauweise aus Stahl gefertigt, deren Masse es jedoch zu reduzieren gilt, da andernfalls für die zu transportierenden Güter eine entsprechend geringere Masse zur Verfügung steht. Darüber hinaus verursacht ein hohes Fahrzeugleergewicht einen hohen Kraftstoffverbrauch, ungünstige Schadstoff-Emissionswerte und schlechtere Fahrleistungen. Die Hersteller versuchen dem Bedürfnis nach einer möglichst leichten Kupplungsplatte dahingehend nachzukommen, dass für den jeweiligen Belastungsfall eine gewichtsoptimierte Kupplungsplatte bereitgestellt wird.

Die US 2003/0047906 A1 offenbart eine gewichtsreduzierte Sattelkupplung mit einer Kupplungsplatte aus Stahl oder Aluminium, die auf ihrer Unterseite mit einer Rippenstruktur zur Erhöhung der Festigkeit ausgebildet ist. Auch diese Kupplungsplatte ist für einen spezifischen Belastungsfall ausgelegt, so dass der Hersteller für unterschiedliche Belastungsfälle unterschiedlich dimensionierte Kupplungsplatten konstruieren, produzieren und logistisch in sinnvollen Mengen vorhalten muss.

Die EP 1 697 206 B1 offenbart eine Sattelkupplung mit einer einstückigen Kupplungsplatte sowie Lagerböcken, die mit der Kupplungsplatte verbindbar sind. Die Lagerböcke sind an einer Zugmaschine befestigbar. Die Kupplungsplatte ist aus einer Aluminiumlegierung ausgebildet. Ferner wird ein Verfahren zum Herstellen einer Kupplungsplatte vorgeschlagen.

Die US 5,765,849 offenbart eine Kupplungsplatte für eine Sattelkupplung, die über zwei Lagerböcke mit einer Grundplatte verbunden ist. In den Lagerböcken ist jeweils eine runde Aufnahme vorgesehen, in welche jeweils eine Lagerbuchse aus Gummi eingesetzt ist. In einer Bohrung der Lagerbuchse ist ein Bolzen angeordnet. Ferner ist eine Unterlegscheibe aus Stahl vorgesehen.

Die WO 2009/092756 A1 offenbart eine Fahrzeugkupplung umfassend einen Kupplungskörper und mindestens ein daran angeordnetes Strukturelement. Das Strukturelement ist durch eine Kunststoffmasse kraftschlüssig mit dem Kupplungskörper verbunden.

Der Erfindung lag daher die Aufgabe zugrunde, eine standardisierte Kupplungsplatte bereitzustellen, die ausgehend von einer geringen Belastung ein minimales Eigengewicht aufweist und deren Festigkeit bei höheren zu erwartenden Belastungen angepasst werden kann.

Die Aufgabe wird erfindungsgemäß mit den Merkmalen des Anspruchs 1 gelöst. Typischerweise ist die Kupplungsplatte ein aus Guss oder durch Verschweißen hergestelltes, einstückiges und zerstörungsfrei nicht weiter zerlegbares Stahlbauteil. Darüber hinaus kann die Kupplungsplatte jedoch aus mehreren zueinander beabstandeten Abschnitten gebildet sein, deren Oberseiten zusammen eine plane Lagerebene zum Abstützen einer Aufliegerplatte aufspannen. Eine derartige Kupplungsplatte kann zumindest teilweise auch aus einem Kunststoff gefertigt sein.

Die Betriebskräfte werden vom Königszapfen und der Aufliegerplatte des Sattelaufliegers auf die Kupplungsplatte und von dort über die Lagerböcke auf das Zugfahrzeug übertragen. Insbesondere bei Kurvenfahrten wirken in seitlichen Bereichen der Kupplungsplatte Abhebekräfte, die von den Lagerböcken abgefangen werden. Das mindestens eine Verbindungsmittel zur lösbaren Anbringung mindestens eines Versteifungselementes verläuft daher ebenfalls, zumindest abschnittsweise in einer Achse parallel zu der Querachse der Kupplungsplatte, um nach Einsetzen eines oder mehrerer Versteifungselemente eine Aussteifung der Kupplungsplatte in der Querachse zu erzielen. Bei geringen zu erwartenden Betriebslasten kann die Kupplungsplatte in einer einfachen Konfiguration ohne Versteifungselemente zum Einsatz kommen und dabei eine minimale Eigenmasse aufweisen. Für Fälle mit hohen zu erwartenden Betriebslasten ist es möglich, das mindestens eine Versteifungselement an der Kupplungsplatte anzubringen und dadurch die Biegesteifigkeit in der Querachse zu erhöhen. Mit der Anbringung des mindestens einen Versteifungselementes an der Kupplungsplatte erhöht sich allerdings auch die Eigenmasse der Kupplungsplatte um die Masse des mindestens einen Versteifungselementes.

Vorteilhafterweise umfasst das mindestens eine Verbindungsmittel mehrere Lagerstellen, die zumindest abschnittsweise parallel zu der Querachse der Kupplungsplatte vorzugsweise fluchtend zueinander angeordnet sind. Bei dieser Ausführungsform sind in Richtung der Querachse mehrere Lagerstellen verteilt und beabstandet angeordnet, in welchen sich ein eingesetztes Versteifungselement abstützt. Die Verteilung von mehreren Lagerstellen in Richtung der Querachse trägt weiter zu einer Massereduzierung der Kupplungsplatte bei, da keine in Querrichtung durchgehende und damit längere Lagerstelle notwendig ist. Darüber hinaus ist das Einsetzen und Herauslösen des mindestens einen Versteifungselementes einfacher durchzuführen, da weniger Kontaktfläche und somit geringere Kräfte zur Überwindung der Reibung und einer eventuellen Kontaktkorrosion notwendig sind.

Vorzugsweise umfasst das mindestens eine Verbindungsmittel ein erstes Verbindungsmittel, welches in Richtung der Längsachse auf einer zur Einfahröffnung abgewandten Seite der Querachse angeordnet ist. Dabei ist anzustreben, dass das erste Verbindungsmittel und somit auch ein gegebenenfalls darin eingesetztes erstes Versteifungselement in Längsachse der Kupplungsplatte möglichst nah an den Aufnahmestrukturen der Lagerböcke angeordnet ist, da dort das auf die Kupplungsplatte wirkende Biegemoment am Größten ist. Im Bereich der Einfahröffnung und unmittelbar im Bereich der Querachse, das heißt im Königszapfenlagerbereich, ist es konstruktiv komplizierter, ein Verbindungsmittel an der Kupplungsplatte anbringen, da dort der Königszapfen beim An- und Abkuppeln des Sattelaufliegers in die Sattelkupplung ein- oder ausfährt und unter Umständen die Unterseite der Kupplungsplatte nach unten überragt. Bei einem in das Verbindungsmittel eingelegten Versteifungselement bestünde dann mithin die Gefahr einer Kollision des Königszapfens mit dem Versteifungselement. Darüber hinaus ist der auf der Unterseite der Kupplungsplatte verfügbare freie Bauraum aufgrund der dort ebenfalls untergebrachten Verriegelungsmechanik extrem limitiert.

Anstelle oder ergänzend zu der vorstehend beschriebenen Ausgestaltung mit dem ersten Verbindungsmittel kann das mindestens eine Verbindungsmittel ein zweites Verbindungsmittel umfassen, welches in Richtung der Längsachse auf einer zur Einfahröffnung zugewandten Seite oder unter der Querachse, beabstandet zu einem vertikalen Niveau eines in die Kupplungsplatte eingefahrenen Königszapfens angeordnet ist. Das zweite Verbindungsmittel könnte bei Fahrzeugtypen zum Einsatz kommen, bei denen die Einbausituation kein Einsetzen eines ersten Versteifungselementes in das zugehörige erste Verbindungsmittel zulässt aber dafür ein Einsetzen des zweiten Versteifungselementes in das zweite Verbindungsmittel möglich ist. Das zweite Verbindungsmittel kann außerdem genutzt werden, um die Steifigkeit in der Querachse noch weiter zu erhöhen und sowohl das erste Verbindungsmittel und das zweite Verbindungsmittel mit zugehörigen Versteifungselementen zu bestücken. Die Lage des zweiten Verbindungsmittels ist insofern besonders günstig, da ebenfalls eine zusätzliche Aussteifung der Kupplungsplatte möglichst nah an der Querachse und somit in den Bereichen der höchsten zu erwartenden Kräften erfolgt.

Anstelle oder ergänzend zu der vorstehend beschriebenen Ausgestaltung mit dem ersten und/oder zweiten Verbindungsmittel kann das mindestens eine Verbindungsmittel ein drittes Verbindungsmittel umfassen, welches in Richtung der Längsachse auf einer zur Einfahröffnung zugewandten oder abgewandten Seite der Querachse angeordnet ist. In diesem Fall befindet sich vorzugsweise auf derselben Seite der Querachse wie das erste oder zweite Verbindungsmittel noch ein weiteres, drittes Verbindungsmittel, das beispielsweise bei besonders hohen Anforderungen an die Biegesteifigkeit der Kupplungsplatte mit einem zusätzlichen, dritten Versteifungselement bestückbar ist. Sinnvollerweise ist das dritte Verbindungsmittel unterhalb oder in der Längsachse parallel versetzt zu dem ersten und/oder zweiten Verbindungsmittel angeordnet.

Es hat sich als sinnvoll herausgestellt, wenn auf der Unterseite der Kupplungsplatte eine Rippenstruktur angeformt ist. Unter einer Rippenstruktur werden einstückig, integral an der Unterseite der Kupplungsplatte angreifende Wände verstanden, die im Wesentlichen senkrecht zur Unterseite der Kupplungsplatte ausgerichtet sind. Die Rippenstruktur dient ebenfalls zur Aussteifung der Kupplungsplatte. Dieses lässt sich besonders effektiv erreichen, wenn die beteiligten Wände untereinander in Verbindung stehen.

Günstigerweise ist das mindestens eine Verbindungsmittel integraler Bestandteil der Rippenstruktur. Das mindestens eine Verbindungsmittel kann insbesondere aus einer in der Rippenstruktur eingebrachten Öffnung, Bohrung oder an einer der Rippen rechtwinklig zu deren Erstreckung angeformten Wulst in Form eines horizontalen Wandfortsatzes gebildet sein, der parallel zur planen Ebene der Kupplungsplatte verläuft. Der Vorteil dieser Ausgestaltung liegt darin, dass keine zusätzlichen Bauteile an der Kupplungsplatte anzuformen sind.

Die Rippenstruktur kann parallel zur Längsachse verlaufende Längsrippen und parallel zur Querachse verlaufende Querrippen aufweisen. Die Längs- und Querrippen stehen somit im Wesentlichen senkrecht aufeinander und bilden zur effektiven Kraftübertragung ein zusammenhängendes Fachwerk aus.

Zweckmäßigerweise umfasst das mindestens eine Verbindungsmittel zwei Außenlagerstellen mit jeweils einer parallel zur Querachse verlaufenden Außenlagerstellenöffnung. Die Außenlagerstellen können in Richtung der Längsachse der Kupplungsplatte vor der auf derselben Seite der Kupplungsplatte angeordneten Aufnahmestruktur für den Lagerbock angeordnet sein.

Besonders bevorzugt ist es, wenn die Außenlagerstellen in den Längsrippen angeordnet sind. Die Längsrippen können dabei insbesondere eine Fortführung von Aufnahmestrukturen der Lagerböcke sein.

Vorzugsweise sind die Außenlagerstellenöffnungen in Umfangsrichtung geschlossen oder schießbar. Hierdurch wird ein Verlust des Versteifungselementes in dessen radialer Richtung vermieden.

Gemäß einer besonders vorteilhaften Ausgestaltung umfasst das mindestens eine Verbindungsmittel eine Zentrallagerstelle mit einer parallel zur Querachse verlaufenden Zentrallagerstellenöffnung. Die Zentrallagerstelle mit ihrer Zentrallagerstellenöffnung kann annähernd die gesamte Breite der Kupplungsplatte in Richtung der Querachse aufnehmen, so dass keine Außenlagerstellen mehr notwendig sind. Es ist jedoch auch möglich, die Zentrallagerstelle in einem mittleren Abschnitt in Nähe der Längsachse vorzusehen und beabstandet hierzu die Außenlagerstellen anzuordnen. Günstigerweise ist die Zentrallagerstelle zwischen den Außenlagerstellen angeordnet. In diesem Fall ist ein in das mindestens eine Verbindungsmittel eingelegtes Versteifungselement mit drei Stellen an der Unterseite der Kupplungsplatte abgestützt.

Die Zentrallagerstellenöffnung kann in Umfangsrichtung teilweise offen oder mittels eines Verschlussmittels schließbar sein. Wenn bereits eine Verlustsicherung des Versteifungselementes durch entsprechend geformte Außenlagerstellen vorhanden ist, kann die Zentrallagerstellenöffnung in einer Richtung parallel zur planen Lagerebene der Kupplungsplatte teilweise offen sein. Es ist dann ausreichend, wenn ein in die Zentrallagerstellenöffnung eingesetztes Versteifungselement in Einbaulage der Kupplungsplatte nach unten ein Widerlager findet.

Sollten die Außenlagerstellen keine Verlustsicherheit des Versteifungselementes gewährleisten, ist es sinnvoll, wenn eine ansonsten in Umfangsrichtung teilweise offene Zentrallagerstellenöffnung mittels eines Verschlussmittels, beispielsweise eines eingeschraubten Bolzens, zumindest abschnittsweise geschlossen oder verengt ist, um ein Herausarbeiten eines Versteifungselementes in dessen radialer Richtung zu verhindern.

Die Zentrallagerstelle kann an einer der Querrippen ausgeformt sein. Hierbei ist es besonders vorteilhaft, wenn die Querrippe zusammen mit einem daran angreifenden horizontalen Wandfortsatz eine L-Form aufweist und der horizontale Wandfortsatz, der parallel zur planen Lagerebene der Kupplungsplatte ausgerichtet ist, bei einer Biegebeanspruchung der Kupplungsplatte ein Widerlager für ein Versteifungselement bietet.

Die Erfindung ist an einer Kombination der Kupplungsplatte mit mindestens einem Versteifungselement verwirklicht, bei welcher das mindestens eine Versteifungselement lösbar von dem mindestens einen Verbindungsmittel der Kupplungsplatte gehalten ist. Eine lösbare Anbringung ermöglicht das vollständige Entfernen des mindestens einen Versteifungselementes in Belastungsfällen, bei denen keine erhöhte Festigkeit der Kupplungsplatte benötigt wird. Das mindestens eine Versteifungselement ist derart von dem zugehörigen mindestens einen Verbindungsmittel gehalten, dass in Einbaulage der Kupplungsplatte nach oben wirkende Abhebekräfte von dem mindestens einen Versteifungselement aufgenommen werden.

Vorteilhafterweise ist das mindestens eine Versteifungselement ein Stab. Als Stab bezeichnet man einen schmalen, langen, zumeist massiven Gegenstand mit zumeist rundem oder annähernd quadratischem Querschnitt. Ein Stab ist das einfachste Tragglied in einem Tragwerk wie zum Beispiel einem Fachwerk oder einem Rahmen. Im Unterschied zu einem Balken ist ein Stab im Vergleich zu seiner Länge sehr dünn. Die Stabachse repräsentiert die Schwerachse eines Bauteils. Er kann Normalkräfte übertragen. Ein Stab kann an jeder Stelle belastet werden.

Gemäß einer günstigen Weiterbildung der Erfindung umfasst das mindestens eine Versteifungselement ein zugehöriges, erstes Versteifungselement, welches von dem ersten Verbindungsmittel gehalten ist.

Anstelle oder ergänzend zu der vorstehend beschriebenen Ausgestaltung mit dem ersten Versteifungselement kann das mindestens eine Versteifungselement ein zugehöriges, zweites Versteifungselement umfassen, welches von dem zweiten Verbindungsmittel gehalten ist. Das zweite Versteifungselement kann zusätzlich zu dem ersten Versteifungselement eingesetzt werden, um die Biegefestigkeit in der Querachse weiter zu erhöhen. Ein alternativer Einbau anstelle des ersten Versteifungselementes kann in Erwägung gezogen werden, wenn zum Beispiel die fahrzeugseitigen Voraussetzungen für einen Einbau des ersten Versteifungselementes nicht gegeben sind.

Vorzugsweise ist das zweite Versteifungselement unterhalb eines vertikalen Niveaus eines in die Kupplungsplatte eingefahrenen Königszapfens angeordnet. Hierdurch wird beim An- und Abkuppeln eines Sattelaufliegers eine Kollision des in die Kupplungsplatte einfahrenden Königszapfens mit dem Versteifungselement vermieden.

Anstelle oder ergänzend zu der vorstehend beschriebenen Ausgestaltung mit dem ersten und/oder zweiten Versteifungselement kann das mindestens eine Versteifungselement ein zugehöriges, drittes Versteifungselement umfassen, welches von dem dritten Verbindungsmittel gehalten ist. Zweckmäßigerweise ist das dritte Versteifungselement unterhalb oder in der Längsachse parallel versetzt zu dem ersten und/oder zweiten Versteifungselement angeordnet.

Besonders bevorzugt ist eine Ausführungsform, bei welcher das mindestens eine Versteifungselement eine andere Federkennlinie aufweist als die Kupplungsplatte. Hierfür kann das mindestens eine Versteifungselement sinnvollerweise aus einem anderen Material gefertigt sein als die Kupplungsplatte, insbesondere aus einem karbonhaltigen Material.

Ganz besonders bevorzugt ist eine Ausführungsform, bei welcher das mindestens eine Versteifungselement eine Federkennlinie aufweist, die eine plastische Verformung der Kupplungsplatte vor Erreichen eines vorgegebenen Belastungssollwertes verhindert.

Das mindestens eine Versteifungselement und das mindestens eine Verbindungsmittel sind als Loslager ausgebildet. Hierdurch werden insbesondere unerwünschte Spannungen aufgrund der unterschiedlichen Materialen des mindestens einen Versteifungselementes und des zugehörigen mindestens einen Verbindungsmittels und/oder der Kupplungsplatte reduziert. Darüber hinaus ist das Einsetzen und Entfernen des mindestens einen Versteifungselementes erheblich vereinfacht, da dieses zunächst ohne äußere Krafteinwirkung auf die Kupplungsplatte spielbehaftet in dem mindestens einen Verbindungsmittel angeordnet ist. Unter äußerer Krafteinwirkung beginnt sich zunächst die Kupplungsplatte zu verformen, wodurch das Spiel zwischen dem mindestens einen Verbindungsmittel und dem darin gehaltenen mindestens einen Versteifungselement aufgebraucht und das mindestens eine Versteifungselement sukzessive an der Kraftübertragung beteiligt ist. Die Wirkung des mindestens einen Versteifungselementes kommt folglich zum Tragen, bevor die Kupplungsplatte beginnt, sich elastisch zu verformen. Dabei ist bei der Auswahl der Federkennlinien von Kupplungsplatte und dem mindestens einen Versteifungselement sowie bei der spielbehafteten Lagerung zwischen dem mindestens einen Verbindungsmittel und dem zugehörigen mindestens einen Versteifungselement darauf zu achten, dass die Verformung der Kupplungsplatte stets in einem reversiblen Bereich vor Erreichen der Fließgrenze stattfindet. Gleiches gilt für das mindestens eine Versteifungselement.

Es kann auch sinnvoll sein, zwischen dem mindestens einen Versteifungselement und der Lagerstelle/den Lagerstellen, insbesondere der Außen- und/oder Zentrallagerstelle, ein elastisches Dämpfungselement vorzusehen, welches einerseits einen einfacheren Ein- und Ausbau des mindestens einen Versteifungselementes und andererseits einen langsameren Kraftaufbau innerhalb des mindestens einen Versteifungselementes ermöglicht.

Zum besseren Verständnis wird die Erfindung nachfolgend anhand von neun Figuren näher erläutert. Es zeigen die
- **Fig. 1:**: eine Vorderansicht auf eine Sattelkupplung mit Kupplungsplatte und erstem Verbindungsmittel sowie darin eingesetztem ersten Versteifungselement gemäß einer ersten Ausführungsform;
- **Fig. 2:**: eine Unteransicht auf die Kupplungsplatte gemäß Fig. 1;
- **Fig. 3:**: eine Seitenansicht auf die Kupplungsplatte gemäß Fig. 1;
- **Fig. 4:**: eine Unteransicht auf eine Kupplungsplatte mit erstem Verbindungsmittel sowie darin eingesetztem ersten Versteifungselement gemäß einer zweiten Ausführungsform;
- **Fig. 5:**: einen Längsschnitt in der Schnittebene A:A von Fig. 4;
- **Fig. 6:**: einen Längsschnitt durch die Kupplungsplatte mit zweitem Verbindungsmittel und darin eingesetztem zweiten Versteifungselement;
- **Fig. 7:**: einen Längsschnitt durch die Kupplungsplatte mit erstem und zweitem Verbindungsmittel und darin eingesetztem ersten und zweiten Versteifungselement;
- **Fig. 8:**: einen Längsschnitt durch die Kupplungsplatte mit erstem und drittem Verbindungsmittel und darin eingesetztem ersten und dritten Versteifungselement und
- **Fig. 9:**: einen Längsschnitt durch die Kupplungsplatte mit erstem, zweitem und drittem Verbindungsmittel und darin eingesetztem ersten, zweiten und dritten Versteifungselement.

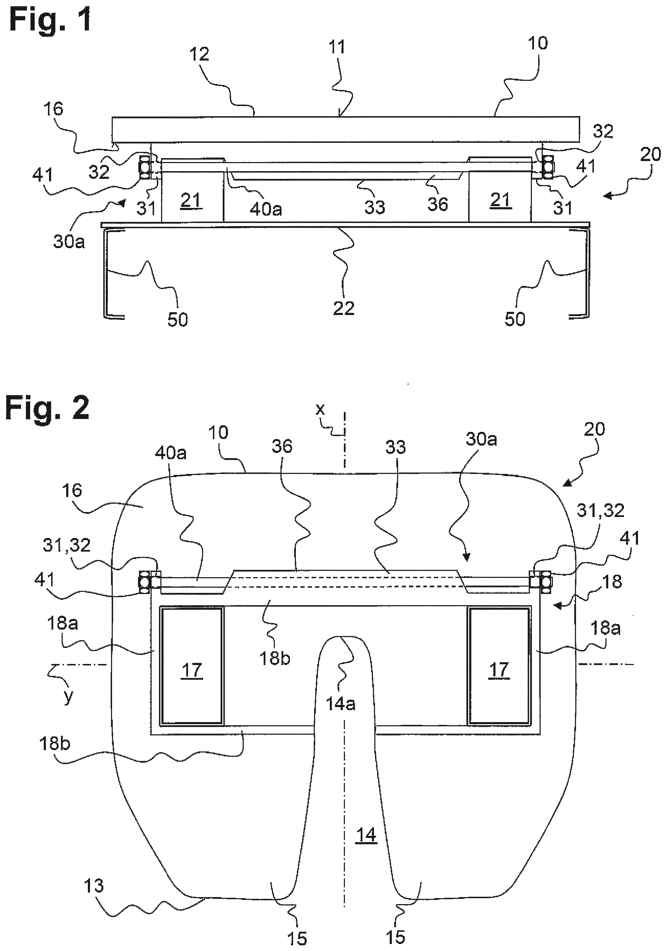

Die Fig. 1 zeigt in einer Vorderansicht eine Kupplungsplatte 10 einer Sattelkupplung 20 in montiertem Zustand an einem Fahrzeugrahmen 50 eines nicht weiter gezeigten Zugfahrzeugs. Die Sattelkupplung 20 weist hierfür zwei seitlich zueinander beabstandete Lagerböcke 21 auf, die an ihrem oberen Ende komplementär ausgebildete Aufnahmestrukturen 17 (siehe Fig. 2) der Kupplungsplatte 10 kontaktieren und die darauf wirkenden Lasten auf den Fahrzeugrahmen 50 übertragen.

In dem gezeigten Ausführungsbeispiel von Fig. 1 stehen die Lagerböcke 21 mit ihrem unteren Ende auf einer Montageplatte 22 auf, welche von oben auf den Fahrzeugrahmen 50 aufgelegt und mit diesem verbunden ist. Bei einem schmaleren Fahrzeugrahmen 50 ist es auch möglich, die Lagerböcke 21 unmittelbar oder mittels eines Hilfsrahmens an dem Fahrzeugrahmen 50 zu befestigen. Die Lagerböcke 21 ermöglichen eine Kippbewegung um eine in Fig. 2 eingezeichnete Querachse y, die eine Relativbewegung zwischen Zugfahrzeug und Sattelauflieger insbesondere beim Überfahren von Kuppen und Mulden ermöglicht.

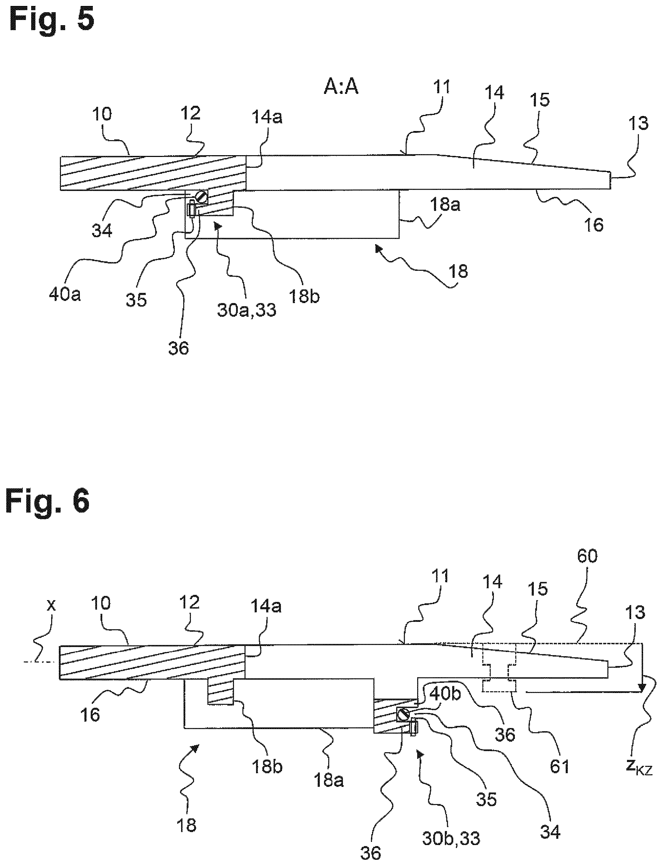

Die Kupplungsplatte 10 ist auf ihrer Oberseite 11 mit einer planen Lagerebene 12 ausgebildet, auf der sich nach dem Ankuppeln eines Sattelaufliegers dieser mit einer Aufliegerplatte 60 (siehe Fig. 6) abstützt. Im vorliegenden Ausführungsbeispiel ist die Oberseite 11 durchgehend ausgeführt, kann jedoch auch aus mehreren tellerartigen Teilflächen bestehen, die dann zueinander eine plane Lagerebene 12 bilden.

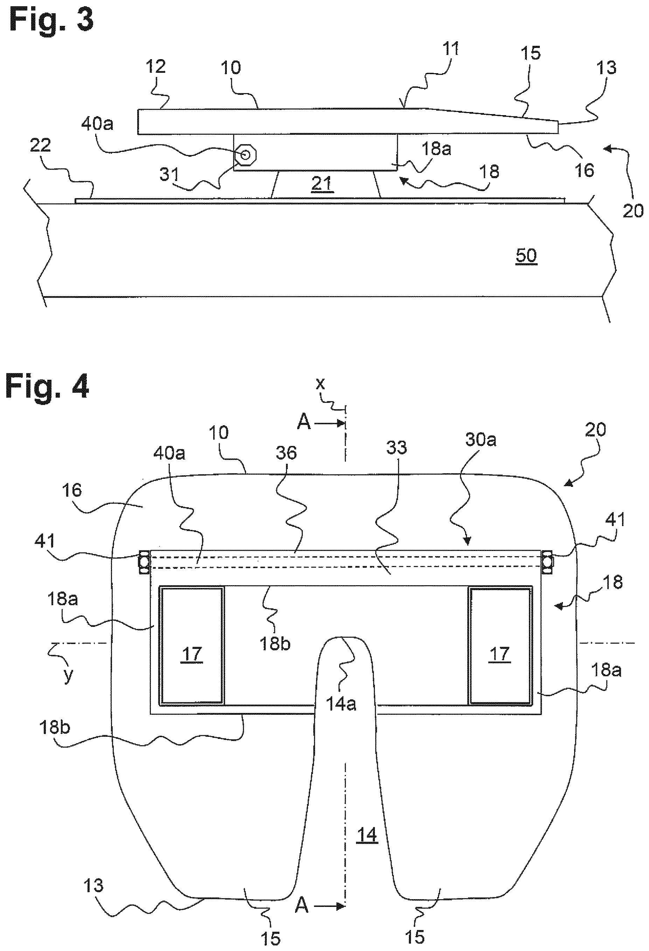

Wie besonders gut in der Unteransicht gemäß Fig. 2 zu erkennen ist, weist die Kupplungsplatte 10 an ihrem hinteren Ende 13 eine Einfahröffnung 14 auf, die in einer Längsachse x verläuft und in einem Königszapfenlagerbereich 14a ungefähr im Bereich der Querachse y endet. Die Einfahröffnung 14 dient während des An- und Abkuppelns der seitlichen Führung eines hier nicht gezeigten Königszapfens 61 (siehe Fig. 6) eines Sattelaufliegers bis in seine Verriegelungsstellung. Die Einfahröffnung 14 weist für ein einfacheres Treffen des Königszapfens 61 einen in Richtung des hinteren Endes 13 konisch aufgeweiteten Abschnitt auf, der beidseitig von Einfahrhörnern 15 flankiert ist. Die Einfahrhörner 15 fallen entsprechend der Seitenansicht gemäß Fig. 3 in Richtung des hinteren Endes 13 ab und bilden dadurch vor dem Ankuppeln eines Sattelaufliegers eine Rampe für dessen Aufliegerplatte 60, die insbesondere bei einer tief positionierten Ausgangslage in Richtung der planen Lagerebene 13 angehoben wird.

Die Aufnahmestrukturen 17 zur Befestigung der Lagerböcke 21 an der Kupplungsplatte 10 sind miteinander über eine auf einer Unterseite 16 ausgeformte Rippenstruktur 18 verbunden. Die Rippenstruktur 18 weist parallel zur Längsachse x verlaufende Längsrippen 18a sowie parallel zur Querachse y verlaufende Querrippen 18b auf. Sofern, wie gezeigt, zwei Querrippen 18b vorhanden sind, sollten diese beidseitig des Königszapfenlagerbereiches 14a angeordnet sein, um möglichst effektiv die vom Königszapfen 61 in die Kupplungsplatte 10 eingeleiteten Abhebekräfte abfangen zu können. Beide Querrippen 18b sind über die beiden Längsrippen 18a miteinander zu einem hier vollständig, gegebenenfalls auch teilweise, geschlossenen Kasten verbunden.

Um die Kupplungsplatte 10 zusätzlich versteifen zu können, ist an der Rippenstruktur 18 ein erstes Verbindungsmittel 30a angeordnet, mit dessen Hilfe an der Kupplungsplatte 10 ein zusätzliches, erstes Versteifungselement 40a befestigbar ist. Das erste Verbindungsmittel 30a erlaubt eine lösbare Anbringung des ersten Versteifungselementes 40a parallel versetzt zu der Querachse y der Kupplungsplatte 10, wodurch insbesondere ein Abheben seitlicher Bereiche und eine damit einhergehende Verformung der Kupplungsplatte 10 in der Querachse y bei hoher Belastung vermieden oder zumindest verringert wird.

Bei dem ersten Versteifungselement 40a handelt es sich gemäß der in den Figuren gezeigten Ausführungsformen um einen Stab mit kreisrundem Querschnitt. Prinzipiell sind jedoch auch andere Profilformen und Querschnitte möglich; so kann das erste Versteifungselement 40a beispielsweise in Bereichen mit großer Krafteinleitung eine größere Wandstärke oder einen verdickten Durchmesser aufweisen.

Das erste Verbindungsmittel 30a umfasst in der Ausführungsform der Figuren 1 bis 3 an gegenüberliegenden Seiten befindliche Außenlagerstellen 31 und eine zwischen den Außenlagerstellen 31 positionierte Zentrallagerstelle 33. Die Außenlagerstellen 31 sind jeweils in einer der Längsrippen 18a angeordnet und weisen jeweils eine Außenlagerstellenöffnung 32 auf, die parallel zur Querachse y ausgerichtet sind und miteinander fluchten. Die Außenlagerstellenöffnungen 32 sind Bohrungen, welche die Längsrippen 18a in ihrer axialen Erstreckung vollständig durchbrechen. Aufgrund der in Umfangsrichtung vollständig geschlossenen Außenlagerstellenöffnungen 32 ist ein Verlust des ersten Versteifungselementes 40a in radialer Richtung ausgeschlossen.

Für die Montage des ersten Versteifungselementes 40a wurde dieses von einer Seite der Kupplungsplatte 10 durch beide Außenlagerstellenöffnungen 32 hindurchgeschoben und gegen Verlust gesichert. Die Verlustsicherung umfasst auf beiden Enden des ersten Versteifungselementes 40a aufgeschraubte Verlustsicherungskappen 41, die ein Herauswandern des ersten Versteifungselementes 40a in axialer Richtung verhindern. Die Verlustsicherungskappen 41 sind derart an dem ersten Versteifungselement 40a befestigt, dass dieses in axialer Richtung beweglich ist und dadurch trotz unterschiedlicher Ausdehnungskoeffizienten von Kupplungsplatte 10 und erstem Versteifungselement 40a im beladungsfreien Zustand eine weitgehend spannungsfreie Lagerung des ersten Versteifungselementes 40a ermöglicht.

Das erste Versteifungselement 40a stützt sich im Belastungsfall zusätzlich zwischen den Außenlagerstellen 31 auf der Zentrallagerstelle 33 ab. Die Zentrallagerstelle 33 ist im Wesentlichen durch einen horizontalen Wandfortsatz 36 gebildet, der an der Querrippe 18b angeformt ist und zusammen mit dieser eine L-Form bildet.

In Einbaulage untergreift der horizontale Wandfortsatz 36 das zwischen den Außenlagerstellen 31 verlaufende erste Versteifungselement 40a von unten. Bei einem Abheben einer Seite der Kupplungsplatte 10 beginnt sich aufgrund der Biegebeanspruchung der Kupplungsplatte 10 in der Querachse y auch das erste Versteifungselement 40a plastisch zu verformen, bis es zur Anlage an dem horizontalen Wandfortsatz 36 der Querrippe 18b kommt. Die Ausformung des horizontalen Wandfortsatzes 36 an der Querrippe 18b und eine daraus gebildete Zentrallagerstellenöffnung 34 zur Aufnahme des ersten Versteifungselementes 40a ist besonders gut in dem Längsschnitt der Fig. 5 zu erkennen. Die Zentrallagerstellenöffnung 34 fluchtet gemäß der ersten Ausführungsform auf beiden Seiten mit den Außenlagerstellenöffnungen 32.

Die Fig. 4 und Fig. 5 zeigt eine zweite Ausführungsform der Erfindung, bei welcher auf die Außenlagerstellen 31 verzichtet wurde und das erste Versteifungselement 40a ausschließlich von der Zentrallagerstelle 33 gehalten ist. Die Zentrallagerstelle 33 erstreckt sich hierfür in Richtung der Querachse y annähernd über die gesamte Breite der Querrippe 18b, die hierfür entsprechend Fig. 5 ebenfalls über einen horizontalen Wandfortsatz 36 verfügt, auf welcher das erste Versteifungselement 40a aufliegt.

Aufgrund der fehlenden Außenlagerstellen 31, welche mit Hilfe ihrer in Umfangsrichtung geschlossenen Außenlagerstellenöffnungen 32 eine Fixierung des ersten Versteifungselementes 40a in dessen radialer Richtung bewirken, ist das erste Versteifungselement 40a hier durch Verschlussmittel 35 gegen Verlust in radialer Richtung gesichert. Das Verschlussmittel 35 sorgt für eine Verengung der Zentrallagerstellenöffnung 34, so dass das erste Versteifungselement 40a nicht mehr in radialer Richtung durch die ansonsten einseitig offene Zentrallagerstellenöffnung 34 hindurchgelangen kann. Das Verschlussmittel 35 kann beispielsweise aus mehreren versetzt zueinander angeordneten Schraubbolzen gebildet sein, die über entsprechende Bohrungen durch den horizontalen Wandfortsatz 36 hindurchgeführt sind und bis in die Zentrallagerstellenöffnung 34 hineinragen.

Für einen Einsatzweck mit niedrigen zu erwartenden Betriebslasten kann die Kupplungsplatte 10 auch ohne das erste Versteifungselement 40a jedoch stets mit dem dafür vorgesehenen ersten Verbindungsmittel 30a ausgestattet sein.

Der Längsschnitt gemäß Fig. 6 zeigt eine alternative Einbauposition für ein zweites Verbindungsmittel 30b und ein damit zusammenwirkendes, zweites Versteifungselement 40b, die nicht wie das erste Verbindungsmittel 30a und erste Versteifungselement 40a in der Längsachse x auf der dem hinteren Ende 13 abgewandten Seite des Königszapfenlagerbereiches 14a, sondern auf der in Längsrichtung x dem hinteren Ende 13 zugewandten Seite des Königszapfenlagerbereiches 14a beziehungsweise der Querachse y angeordnet sind. Die dort befindliche Querrippe 18b liegt unter der Einfahröffnung 14 unterhalb eines vertikalen Niveaus z_{KZ} des Königszapfens 61, dessen Position während des Kupplungsvorganges zusammen mit der Aufliegerplatte 60 angedeutet ist, und kann daher nicht mit dem Königszapfen 61 kollidieren. In axialer Erstreckung verläuft durch die Querrippe 18b unterhalb des vertikalen Niveaus z_{KZ} eine nutförmige Zentrallagerstellenöffnung 34, die nach oben und unten von einem horizontalen Wandfortsatz 36 begrenzt ist. In die Zentrallagerstellenöffnung 34 ist das zweite Versteifungselement 40b eingesetzt und trägt zu einer Erhöhung der Biegesteifigkeit der Kupplungsplatte 10 bei.

Für einen Einsatzweck mit niedrigen zu erwartenden Betriebslasten kann die Kupplungsplatte 10 auch ohne das zweite Versteifungselement 40b jedoch stets mit dem dafür vorgesehenen zweiten Verbindungsmittel 30b ausgestattet sein.

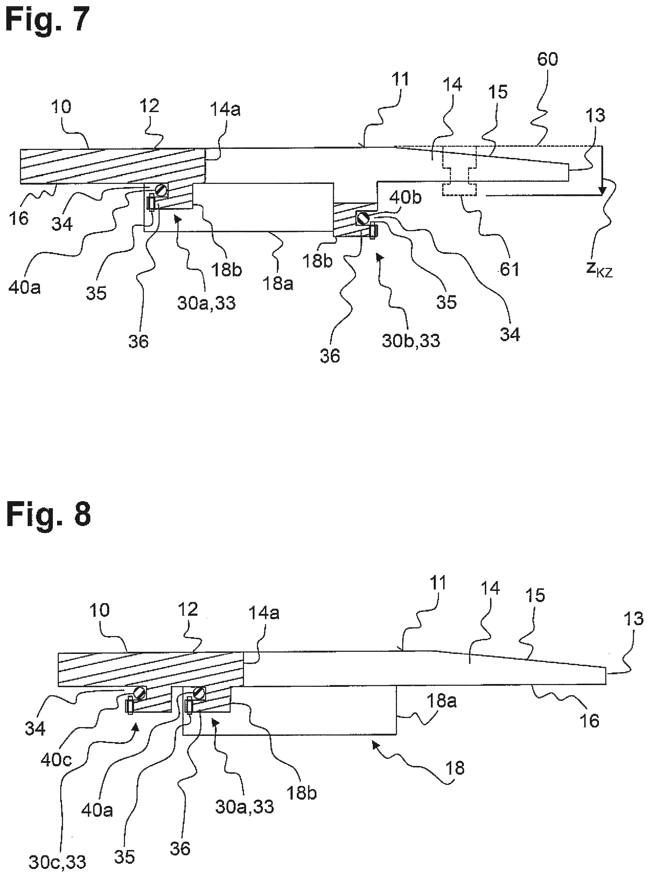

Die beschriebenen Ausführungsbeispiele gemäß Fig. 1 bis Fig. 6 ermöglichten eine Variabilität hinsichtlich einer Erhöhung der Biegesteifigkeit durch Einsetzen oder Weglassen eines ersten oder zweiten Versteifungselementes 40a, 40b in ein zugehöriges erstes oder zweites Verbindungsmittel 30a, 30b. Die Ausführungsbeispiele gemäß der Fig. 7 und Fig. 8 erhöhen das Spektrum der Belastbarkeit dadurch, dass an der Kupplungsplatte 10 zwei der Verbindungsmittel 30a, 30b, 30c vorhanden sind, in welche wahlweise keines, ein oder zwei der Versteifungselemente 40, 40b, 40c eingebracht sind.

In der Darstellung der Fig. 7 sind an der zum hinteren Ende 13 entfernten Querrippe 18b ein erstes Verbindungsmittel 30a in Form einer Zentrallagerstelle 33 und zusätzlich an der dem hinteren Ende 13 nahen Querrippe 18b ein zweites Verbindungsmittel 30b ausgebildet. Die jeweiligen Zentrallagerstellenöffnungen 34 sind voneinander abgewandt und zeigen jeweils von der Rippenstruktur 18 weg, wodurch eine einfachere Bestückung des oder der Verbindungsmittel 30a, 30b mit zugehörigen Versteifungselementen 40a, 40b möglich ist.

Gemäß der in Fig. 8 dargestellten Ausführungsform sind zwei parallel ausgerichtete Verbindungsmittel 30a, 30c zu erkennen, die wie gezeigt mit zugehörigen Versteifungselementen 40a, 40c versehen sein können und dadurch eine maximale Aussteifung der Kupplungsplatte 10 erzielen. Die Verbindungsmittel 30a, 30c sind auf einer Höhenlage parallel versetzt zu der planen Lagerebene 12 ausgerichtet. Wahlweise können beide Versteifungselemente 40a, 40c aus den Verbindungsmitteln 30a, 30c oder lediglich ein einzelnes Versteifungselement 40a, 40c aus einem der Verbindungsmittel 30a, 30c entfernt werden. Die Verbindungsmittel 30a, 30c verbleiben dann ohne Versteifungselement 40a, 40c an der Kupplungsplatte.

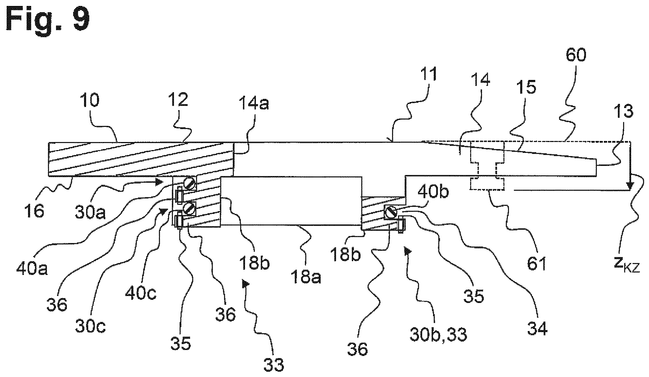

Die Fig. 9 zeigt eine weitere Ausführungsform mit insgesamt drei Verbindungsmitteln 30a, 30b, 30c, von denen ein erstes und drittes Verbindungsmittel 30a, 30c in derselben Querrippe 18b übereinander angeordnet sind. Bei der Querrippe 18b handelt es sich um die zum hinteren Ende 13 entfernte Querrippe 18b. In der zum hinteren Ende 13 nahen Querrippe 18b ist lediglich das zweite Verbindungsmittel 30b ausgebildet. Aufgrund der Einhaltung eines vertikal größeren Abstandes zur planen Lagerebene 12 als des Niveaus z_{KZ} des Königszapfens 61 dürfte wegen der Schwenkbewegung der Kupplungsplatte 10 im Fahrbetrieb kein ausreichender Bauraum für ein noch darunter angebrachtes, weiteres Verbindungsmittel vorhanden sein.

Je nach zu erwartender Belastung der Kupplungsplatte 10 können die Verbindungsmittel 30a, 30b, 30c alle, teilweise oder gar nicht mit Versteifungselementen 40a, 40b, 40c besetzt sein. Insofern ermöglicht sie Ausführungsform gemäß Fig. 9 eine maximale Variabilität im Hinblick auf die Anpassbarkeit an zu erwartende Belastungsszenarien.

### Bezugszeichenliste

- 10: Kupplungsplatte
- 11: Oberseite
- 12: plane Lagerebene
- 13: hinteres Ende
- 14: Einfahröffnung
- 14a: Königszapfenlagerbereich
- 15: Einfahrhörner
- 16: Unterseite
- 17: Aufnahmestruktur
- 18: Rippenstruktur
- 18a: Längsrippen
- 18b: Querrippen

- 20: Sattelkupplung
- 21: Lagerbock
- 22: Montageplatte

- 30a: erstes Verbindungsmittel
- 30b: zweites Verbindungsmittel
- 30c: drittes Verbindungsmittel
- 31: Außenlagerstelle
- 32: Außenlagerstellenöffnung
- 33: Zentrallagerstelle
- 34: Zentrallagerstellenöffnung
- 35: Verschlussmittel
- 36: horizontaler Wandfortsatz
- 40a: erstes Versteifungselement
- 40b: zweites Versteifungselement
- 40c: drittes Versteifungselement
- 41: Verlustsicherungskappen

- 50: Fahrzeugrahmen

- 60: Aufliegerplatte
- 61: Königszapfen

- x: Längsachse
- y: Querachse
- z_{KZ}: Niveau Königszapfen

## Patentansprüche

1. Kombination einer Kupplungsplatte (10) für eine Sattelkupplung (20) mit mindestens einem Versteifungselement (40a, 40b, 40c), wobei die Kupplungsplatte (10) auf einer Oberseite (11) eine plane Lagerebene (12) und an einem hinteren Ende (13) zwei, eine Einfahröffnung (14) begrenzende Einfahrhörner (15) aufweist, die Einfahröffnung (14) in einer Längsachse (x) der Kupplungsplatte (10) verläuft und in einem Königszapfenlagerbereich (14a) endet, und die Kupplungsplatte (10) auf ihrer Unterseite (16) beidseitig des Königszapfenlagerbereiches (14a) und auf einer Querachse (y) zueinander beabstandet jeweils mit einer Aufnahmestruktur (17) für einen Lagerbock (21) ausgebildet ist,
**dadurch gekennzeichnet,**
**dass** an der Kupplungsplatte (10) unter der planen Lagerebene (12) mindestens ein Verbindungsmittel (30a, 30b, 30c) zur lösbaren Anbringung mindestens eines Versteifungselementes (40a, 40b, 40c) ausgebildet ist, wobei das mindestens eine Versteifungselement (40a, 40b, 40c) lösbar von dem mindestens einen Verbindungsmittel (30a, 30b, 30c) der Kupplungsplatte (10) gehalten ist, und
**dass** das mindestens eine Versteifungselement (40a, 40b, 40c) und das mindestens eine Verbindungsmittel (30a, 30b, 30c) als Loslager ausgebildet sind.

2. Kombination nach Anspruch 1, **dadurch gekennzeichnet, dass** das mindestens eine Verbindungsmittel (30a, 30b, 30c) mehrere Lagerstellen (31, 33) umfasst, die zumindest abschnittsweise parallel zu der Querachse (y) der Kupplungsplatte (10) fluchtend zueinander angeordnet sind.

3. Kombination nach Anspruch 1 oder 2, **dadurch gekennzeichnet, dass** das mindestens eine Verbindungsmittel (30a, 30b, 30c) ein erstes Verbindungsmittel (30a) umfasst, welches in Richtung der Längsachse (x) auf einer zur Einfahröffnung (14) abgewandten Seite der Querachse (y) angeordnet ist.

4. Kombination nach einem der Ansprüche 1 bis 3, **dadurch gekennzeichnet, dass** das mindestens eine Verbindungsmittel (30a, 30b, 30c) ein zweites Verbindungsmittel (30b) umfasst, welches in Richtung der Längsachse (x) auf einer zur Einfahröffnung (14) zugewandten Seite der Querachse (y) unterhalb eines vertikalen Niveaus (z_{KZ}) eines in die Kupplungsplatte (10) eingefahrenen Königszapfens (61) angeordnet ist.

5. Kombination nach einem der Ansprüche 1 bis 4, **dadurch gekennzeichnet, dass** das mindestens eine Verbindungsmittel (30a, 30b, 30c) ein drittes Verbindungsmittel (30c) umfasst, welches in Richtung der Längsachse (x) auf einer zur Einfahröffnung (14) zugewandten oder abgewandten Seite der Querachse (y) angeordnet ist.

6. Kombination nach einem der Ansprüche 1 bis 5, **dadurch gekennzeichnet, dass** auf der Unterseite (16) der Kupplungsplatte (10) eine Rippenstruktur (18) angeformt ist.

7. Kombination nach Anspruch 6, **dadurch gekennzeichnet, dass** das mindestens eine Verbindungsmittel (30a, 30b, 30c) integraler Bestandteil der Rippenstruktur (18) ist.

8. Kombination nach einem der Ansprüche 1 bis 7, **dadurch gekennzeichnet, dass** das mindestens eine Verbindungsmittel (30a, 30b, 30c) zwei Außenlagerstellen (31) mit jeweils einer parallel zur Querachse (y) verlaufenden Außenlagerstellenöffnung (32) umfasst.

9. Kombination nach einem der Ansprüche 1 bis 8, **dadurch gekennzeichnet, dass** das mindestens eine Verbindungsmittel (30a, 30b, 30c) eine Zentrallagerstelle (33) mit einer parallel zur Querachse (y) verlaufenden Zentrallagerstellenöffnung (34) umfasst.

10. Kombination nach einem der vorhergehenden Ansprüche, **dadurch gekennzeichnet, dass** das mindestens eine Versteifungselement (40a, 40b, 40c) ein erstes Versteifungselement (40a) umfasst, welches von dem ersten Verbindungsmittel (30a) gehalten ist.

11. Kombination nach einem der vorhergehenden Ansprüche, **dadurch gekennzeichnet, dass** das mindestens eine Versteifungselement (40a, 40b, 40c) ein zweites Versteifungselement (40b) umfasst, welches von dem zweiten Verbindungsmittel (30b) gehalten ist.

12. Kombination nach einem der vorhergehenden Ansprüche, **dadurch gekennzeichnet, dass** das zweite Versteifungselement (40b) unterhalb eines vertikalen Niveaus (z_{KZ}) eines in die Kupplungsplatte (10) eingefahrenen Königszapfens (61) angeordnet ist.

13. Kombination nach einem der vorhergehenden Ansprüche, **dadurch gekennzeichnet, dass** das mindestens eine Versteifungselement (40a, 40b, 40c) ein drittes Versteifungselement (40c) umfasst, welches von dem dritten Verbindungsmittel (30c) gehalten ist.

## Claims

1. Combination of a coupling plate (10) for a fifth wheel (20) with at least one reinforcement element (40a, 40b, 40c), wherein the coupling plate (10) has on an upper side (11) a planar bearing plane (12) and at a rear end (13) two horn-like introduction members (15) which delimit an introduction opening (14), the introduction opening (14) extends in a longitudinal axis (x) of the coupling plate (10) and terminates in a kingpin bearing region (14a), and the coupling plate (10) is constructed at the lower side (16) thereof at both sides of the kingpin bearing region (14a) and on a transverse axis (y) with spacing from each other with a receiving structure (17) for a bearing block (21),
**characterised in that**
at least one connection means (30a, 30b, 30c) for releasably fitting at least one reinforcement element (40a, 40b, 40c) is constructed on the coupling plate (10) below the planar bearing plane (12), wherein the at least one reinforcement element (40a, 40b, 40c) is retained so as to be able to be released from the at least one connection means (30a, 30b, 30c) of the coupling plate (10), and
that the at least one reinforcement element (40a, 40b, 40c) and the at least one connection means (30a, 30b, 30c) are constructed as a movable bearing.

2. Combination according to claim 1, **characterised in that** the at least one connection means (30a, 30b, 30c) comprises a plurality of bearing locations (31, 33) which are at least partially arranged parallel with the transverse axis (y) of the coupling plate (10) in alignment with each other.

3. Combination according to claim 1 or 2, **characterised in that** the at least one connection means (30a, 30b, 30c) comprises a first connection means (30a) which is arranged in the direction of the longitudinal axis (x) at a side of the transverse axis (y) facing away from the introduction opening (14).

4. Combination according to any one of claims 1 to 3, **characterised in that** the at least one connection means (30a, 30b, 30c) comprises a second connection means (30b) which is arranged in the direction of the longitudinal axis (x) at a side of the transverse axis (y) facing the introduction opening (14) below a vertical level (z_{KZ}) of a kingpin (61) which is introduced into the coupling plate (10).

5. Combination according to any one of claims 1 to 4, **characterised in that** the at least one connection means (30a, 30b, 30c) comprises a third connection means (30c) which is arranged in the direction of the longitudinal axis (x) at a side of the transverse axis (y) facing or facing away from the introduction opening (14).

6. Combination according to any one of claims 1 to 5, **characterised in that** a rib structure (18) is formed on the lower side (16) of the coupling plate (10).

7. Combination according to claim 6, **characterised in that** the at least one connection means (30a, 30b, 30c) is an integral component of the rib structure (18).

8. Combination according to any one of claims 1 to 7, **characterised in that** the at least one connection means (30a, 30b, 30c) comprises two outer bearing locations (31), each having an outer bearing location opening (32) which extends parallel with the transverse axis (y).

9. Combination according to any one of claims 1 to 8, **characterised in that** the at least one connection means (30a, 30b, 30c) comprises a central bearing location (33) having a central bearing location opening (34) which extends parallel with the transverse axis (y).

10. Combination according to any of the preceding claims, **characterised in that** the at least one reinforcement element (40a, 40b, 40c) comprises a first reinforcement element (40a) which is retained by the first connection means (30a).

11. Combination according to any of the preceding claims , **characterised in that** the at least one reinforcement element (40a, 40b, 40c) comprises a second reinforcement element (40b) which is retained by the second connection means (30b).

12. Combination according to any of the preceding claims , **characterised in that** the second reinforcement element (40b) is arranged below a vertical level (z_{KZ}) of a kingpin (61) which is introduced into the coupling plate (10).

13. Combination according to any of the preceding claims , **characterised in that** the at least one reinforcement element (40a, 40b, 40c) comprises a third reinforcement element (40c) which is retained by the third connection means (30c).

## Revendications

1. Combinaison d'une plaque d'accouplement (10) pour une sellette d'attelage (20) avec d'au moins un élément de renforcement (40a, 40b, 40c), la plaque d'accouplement (10) présentant sur un côté supérieur (11) un plan d'appui plan (12) et à une extrémité arrière (13) deux cornes d'introduction (15) délimitant une ouverture d'introduction (14), l'ouverture d'introduction (14) s'étendant dans un axe longitudinal (x) de la plaque d'accouplement (10) et se terminant dans une zone d'appui de pivot de fusée (14a), et la plaque d'accouplement (10) étant configurée sur son côté inférieur (16) avec une structure de réception (17) pour un bloc de palier (21), respectivement des deux côtés de la zone d'appui de pivot de fusée (14a) et à distance l'une de l'autre sur un axe transversal (y),
**caractérisée en ce que**
au moins un moyen de liaison (30a, 30b, 30c) est formé sur la plaque d'accouplement (10) en dessous du plan d'appui plan (12) pour le montage amovible d'au moins un élément de renforcement (40a, 40b, 40c), l'au moins un élément de renforcement (40a, 40b, 40c) étant maintenu de manière amovible par l'au moins un moyen de liaison (30a, 30b, 30c) de la plaque d'accouplement (10), et
l'au moins un élément de renforcement (40a, 40b, 40c) et l'au moins un moyen de liaison (30a, 30b, 30c) sont configuré sous forme de palier libre.

2. Combinaison selon la revendication 1, **caractérisée en ce que** l'au moins un moyen de liaison (30a, 30b, 30c) comprend plusieurs points d'appui (31, 33), qui sont agencés de manière à être alignés les uns par rapport aux autres au moins en sections parallèlement à l'axe transversal (y) de la plaque d'accouplement (10).

3. Combinaison selon la revendication 1 ou 2, **caractérisée en ce que** l'au moins un moyen de liaison (30a, 30b, 30c) comprend un premier moyen de liaison (30a), qui est agencé dans la direction de l'axe longitudinal (x) sur un côté de l'axe transversal (y) détourné de l'ouverture d'introduction (14).

4. Combinaison selon l'une quelconque des revendications 1 à 3, **caractérisée en ce que** l'au moins un moyen de liaison (30a, 30b, 30c) comprend un deuxième moyen de liaison (30b), qui est agencé dans la direction de l'axe longitudinal (x) sur un côté de l'axe transversal (y) tourné vers l'ouverture d'introduction (14) en dessous d'un niveau vertical (z_{KZ}) d'un pivot de fusée (61) introduit dans la plaque d'accouplement (10).

5. Combinaison selon l'une quelconque des revendications 1 à 4, **caractérisée en ce que** l'au moins un moyen de liaison (30a, 30b, 30c) comprend un troisième moyen de liaison (30c), qui est agencé dans la direction de l'axe longitudinal (x) sur un côté de l'axe transversal (y) tourné vers ou détourné de l'ouverture d'introduction (14).

6. Combinaison selon l'une quelconque des revendications 1 à 5, **caractérisée en ce qu'**une structure nervurée (18) est formée sur le côté inférieur (16) de la plaque d'accouplement (10).

7. Combinaison selon la revendication 6, **caractérisée en ce que** l'au moins un moyen de liaison (30a, 30b, 30c) fait partie intégrante de la structure nervurée (18).

8. Combinaison selon l'une quelconque des revendications 1 à 7, **caractérisée en ce que** l'au moins un moyen de liaison (30a, 30b, 30c) comprend deux points d'appui extérieurs (31) comprenant chacun une ouverture de point d'appui extérieur (32) s'étendant parallèlement à l'axe transversal (y).

9. Combinaison selon l'une quelconque des revendications 1 à 8, **caractérisée en ce que** l'au moins un moyen de liaison (30a, 30b, 30c) comprend un point d'appui central (33) comprenant une ouverture de point d'appui central (34) s'étendant parallèlement à l'axe transversal (y).

10. Combinaison selon l'une quelconque des revendications précédentes, **caractérisée en ce que** l'au moins un élément de renforcement (40a, 40b, 40c) comprend un premier élément de renforcement (40a), qui est maintenu par le premier moyen de liaison (30a).

11. Combinaison selon l'une quelconque des revendications précédentes, **caractérisée en ce que** l'au moins un élément de renforcement (40a, 40b, 40c) comprend un deuxième élément de renforcement (40b), qui est maintenu par le deuxième moyen de liaison (30b).

12. Combinaison selon l'une quelconque des revendications précédentes, **caractérisée en ce que** le deuxième élément de renforcement (40b) est agencé en dessous d'un niveau vertical (z_{KZ}) d'un pivot de fusée (61) introduit dans la plaque d'accouplement (10).

13. Combinaison selon l'une quelconque des revendications précédentes, **caractérisée en ce que** l'au moins un élément de renforcement (40a, 40b, 40c) comprend un troisième élément de renforcement (40c), qui est maintenu par le troisième moyen de liaison (30c).
